(19) Europäisches Patentamt
European Patent Office
Office européen des brevets

(11) **EP 2 584 788 A2**

(12) **EUROPEAN PATENT APPLICATION**

(43) Date of publication:
    **24.04.2013 Bulletin 2013/17**

(51) Int Cl.:
    ***H04N 13/04*** (2006.01)     ***H04N 5/44*** (2011.01)

(21) Application number: **12178348.4**

(22) Date of filing: **27.07.2012**

(84) Designated Contracting States:
    **AL AT BE BG CH CY CZ DE DK EE ES FI FR GB
    GR HR HU IE IS IT LI LT LU LV MC MK MT NL NO
    PL PT RO RS SE SI SK SM TR**
    Designated Extension States:
    **BA ME**

(30) Priority: **21.10.2011 KR 20110108337**

(71) Applicant: **Samsung Electronics Co., Ltd.**
    **Suwon-si, Gyeonggi-do, 443-742 (KR)**

(72) Inventors:
    • **Seo, Je-hwan**
      **Daegu (KR)**

    • **Na, Moon-sung**
      **Gyeonggi-do (KR)**
    • **Yang, Geun-sam**
      **Gyeonggi-do (KR)**
    • **Lee, Sung-han**
      **Gyeonggi-do (KR)**
    • **Lee, Seong-bok**
      **Gyeonggi-do (KR)**

(74) Representative: **Clark, David James**
    **Appleyard Lees**
    **15 Clare Road**
    **Halifax, Yorkshire HX1 2HY (GB)**

(54) **Relay apparatus, relay method, and 3D image system**

(57)     A relay apparatus is provided. The relay apparatus includes a receiving unit configured to receive an IR signal from a 3D display apparatus, a control unit configured to detect control information for driving 3D glasses included in the IR signal and generating a transmission packet according to an RF communication protocol based on the detected control information, and a communication unit configured to transmit the transmission packet to the 3D glasses.

FIG. 1

EP 2 584 788 A2

**Description**

BACKGROUND

**1. Field**

Apparatuses and methods consistent with exemplary embodiments relate to a relay apparatus, a relay method and a three dimensional (3D) image system, and more particularly, to a relay apparatus, a relay method, and a 3D image system which relay communication between a 3D display apparatus and 3D glasses.

**2. Description of the Related Art**

In recent years, efforts to develop 3D display apparatuses are accelerating to view 3D images with a sense of realism. Thereby, it is possible to watch 3D image signals which were in the past mainly watched in theaters at home using general display apparatuses such as a television.

Typically, a shutter glass method is adapted in home televisions. The shutter glasses method is a method in which shutters of glasses in 3D glasses are switched so that a left-eye glass is opened to output a left-eye image and a right-eye glass is open to output a right-eye image, thereby providing a 3D effect.

The shutter glasses method in the related art transmits/receives a synchronous signal adapted to synchronize provision of an image signal of a 3D display apparatus with operations of left-eye and right-eye shutters of 3D glasses in an infrared ray (IR) manner.

However, since noise is inserted into the synchronous signal by a three-wavelength fluorescent lamp or other electronic products which transmit an IR signal such as a remote controller, malfunction of the shutter glasses is caused. So as to solve the problem, a method of transmitting/receiving the synchronous signal between a 3D display apparatus and 3D glasses according to a Bluetooth communication protocol has been used in recent years.

However, the 3D glasses configured to operate according to a Bluetooth communication protocol cannot communicate with the 3D display apparatus in the related art which transmits an IR type synchronous signal. Therefore, there is a need for a method for communicating between the 3D display apparatus according to the IR type and the 3D glasses according to a Bluetooth communication protocol.

SUMMARY

One or more exemplary embodiments may overcome the above disadvantages and other disadvantages not described above. However, it is understood that one or more exemplary embodiment are not required to overcome the disadvantages described above, and may not overcome any of the problems described above.

One or more exemplary embodiments provide a relay apparatus, a relay method, and a 3D image system which have compatibility between a 3D display apparatus and 3D glasses, which use different communication schemes from each other, by converting a signal of an IR type transmitted from the 3D display apparatus into a signal of a radio frequency (RF) communication protocol type and transmitting the converted signal of the RF communication protocol type to the 3D glasses.

According to an aspect of an exemplary embodiment, there is provided a relay apparatus which relays communication between a 3D display apparatus and 3D glasses. The relay apparatus may include: a receiving unit configured to receive an IR signal from the 3D display apparatus; a control unit configured to detect control information for driving of the 3D glasses included in the IR signal and generating a transmission packet according to an RF communication protocol based on the control information; and a communication unit configured to transmit the transmission packet to the 3D glasses.

The control information may include at least one of a synchronous signal corresponding to a point of time when each of a plurality of image frames is output from the 3D display apparatus and duty information of a driving signal which causes shutters of the 3D glasses to turn on.

The control unit may detect the synchronous signal and duty information included in the IR signal using a mapping table including information for IR signals generated from 3D display apparatuses of different manufacturers.

The control unit may acquire period information of a first sequence of the synchronous signal and period information of a second sequence of the synchronous signal and determine whether or not the synchronous signal is stable using a difference between the period information of the first sequence and the period information of the second sequence.

The control unit may determine that the synchronous signal for the second sequence and subsequent sequences is stable when the difference between the period information of the first sequence and the period information of the second sequence is less than preset time information and generate the transmission packet using the stable synchronous signal.

The relay apparatus may further comprise an output unit including at least one light emitting device (LED) module. The control unit may control the output unit to display at least one of reception/non-reception of the IR signal, transmission/non-transmission of the transmission packet, and application/non-application of a power.

The RF communication protocol may be a Bluetooth communication protocol.

The relay apparatus may further comprise a connection unit configured to receive a power from the 3D display apparatus.

The relay apparatus may be integrated with the 3D glasses.

The control unit may acquire timing information related to a shutter-on point of time and a shutter-off point of time of the 3D glasses with reference to the IR signal and generate the transmission packet including the timing information.

The timing information may be delay information from a reference point of time determined between the relay apparatus and the 3D glasses to a shutter-on point of time or shutter-off point of time of the 3D glasses.

The control unit may generate the transmission packet including frame rate information of the 3D display apparatus with reference to the IR signal.

The control unit may detect at least one of control information for a power saving mode of the 3D glasses and control information for a dual view mode of the 3D glasses with reference to the IR signal.

According to another aspect of an exemplary embodiment, there is provided a relay method of a relay apparatus which relays communication between a 3D display apparatus and 3D glasses. The relay method may include: receiving an IR signal from the 3D display apparatus; detecting control information for driving of the 3D glasses included in the IR signal and generating a transmission packet according to a RF communication protocol based on the control information; and transmitting the transmission packet to the 3D glasses.

The control information may include at least one of a synchronous signal corresponding to a point of time when each of a plurality of image frames is output from the 3D display apparatus and duty information of a driving signal which causes shutters of the 3D glasses to turn on.

The generating the transmission packet may include detecting the synchronous signal and duty information included in the IR signal using a mapping table including information for IR signals generated in 3D display apparatuses of different manufacturers.

The generating the transmission packet may include acquiring period information of a first sequence of the synchronous signal and period information of a second sequence of the synchronous signal and determining whether or not the synchronous signal is stable using a difference between the period information of the first sequence and the period information of the second sequence.

The generating the transmission packet may include determining that the synchronous signal for the second sequence and subsequent sequences is stable when the difference between the period information of the first sequence and the period information of the second sequence is less than preset time information and generating the transmission packet using the stable synchronous signal.

The relay method may further include displaying at least one of reception/non-reception of the IR signal, transmission/non-transmission of the transmission packet, and application/non-application of a power using at least one LED module.

The RF communication protocol may be a Bluetooth communication protocol.

The relay method may further include receiving a power from the 3D display apparatus.

The relay apparatus may be integrated with the 3D glasses.

The generating the transmission packet may include acquiring timing information related to a shutter-on point of time or shutter-off point of time of the 3D glasses with reference to the IR signal and generating the transmission packet including the timing information.

The timing information may be delay information from a reference point of time determined between the relay apparatus and the 3D glasses to a shutter-on point of time or shutter-off point of time of the 3D glasses.

The generating the transmission packet may include generating the transmission packet including frame rate information of the 3D display apparatus with reference to the IR signal.

The relay method may further include detecting at least one of control information for a power saving mode of the 3D glasses and control information for a dual view mode of the 3D glasses with reference to the IR signal.

According to another aspect of an exemplary embodiment, there is provided a 3D image system. The 3D image system may include a 3D display apparatus; a relay apparatus; and 3D glasses. The 3D display apparatus may be configured to transmit the IR signal to the relay apparatus. The relay apparatus may be configured to receive the IR signal, detect control information for driving of the 3D glasses included in the IR signal, generate a transmission packet according to an RF communication protocol based on the control information, and transmit the generated transmission packet to the 3D glasses. The 3D glasses may be configured to cause shutter glasses to turn on/off according to the control information included in the transmission packet.

The control information may include at least one of a synchronous signal corresponding to a point of time when each of a plurality of image frames is output from the 3D display apparatus and duty information of a driving signal which causes shutters of the 3D glasses to turn on. The relay apparatus may detect the synchronous signal and duty information included in the IR signal using a mapping table including information for IR signals generated in 3D display apparatuses of different manufacturers.

The RF communication protocol may be a Bluetooth communication protocol.

According to the above-described various exemplary embodiments, the relay apparatus receives a synchronous signal and duty information transmitted in an IR type from the 3D display apparatus, generates a transmission packet according to an RF communication protocol based on the synchronous signal and duty information, and transmits the generated transmission packet to the 3D glasses. Therefore, it is possible to ensure compatibility between the 3D display apparatus of the IR type and the 3D glasses of the RF communication protocol type.

According to the present invention there is provided an apparatus and method as set forth in the appended claims. Other features of the invention will be apparent from the dependent claims, and the description which follows.

Additional aspects and advantages of the exemplary embodiments will be set forth in the detailed description, will be obvious from the detailed description, or may be learned by practicing the exemplary embodiments.

BRIEF DESCRIPTION OF THE DRAWING FIGURES

The above and/or other aspects will be more apparent by describing in detail exemplary embodiments, with reference to the accompanying drawings, in which:

FIG. 1 is a view illustrating a 3D image system according to an exemplary embodiment;
FIG. 2 is a block diagram illustrating a configuration of a relay apparatus according to an exemplary embodiment;
FIG. 3 is a block diagram illustrating a detailed configuration of a relay apparatus according to an exemplary embodiment;
FIG. 4 is a block diagram illustrating a detailed configuration of a relay apparatus according to an exemplary embodiment;
FIG. 5 is a view illustrating a method of filtering an unstable synchronous signal according to an exemplary embodiment; and
FIG. 6 is a flowchart illustrating a method of relay communication between a 3D display apparatus and 3D glasses according to an exemplary embodiment.

DETAILED DESCRIPTION OF THE EXEMPLARY EMBODIMENTS

Hereinafter, exemplary embodiments will be described in more detail with reference to the accompanying drawings.

In the following description, same reference numerals are used for the same elements when they are depicted in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, functions or elements known in the related art are not described in detail since they would obscure the exemplary embodiments with unnecessary detail.

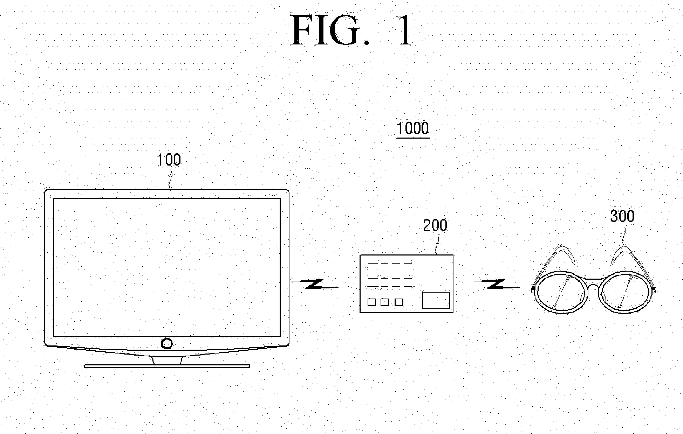

FIG. 1 is a view illustrating a 3D image system according to an exemplary embodiment. As shown in FIG. 1, the 3D image system 1000 includes a 3D display apparatus 100, a relay apparatus 200, and 3D glasses 300.

The 3D display apparatus 100 may transmit an IR signal for driving of the 3D glasses 300 to the relay apparatus 200 or the 3D glasses 300.

Here, the IR signal may include control information for driving of the 3D glasses 300. The control information may include a synchronous signal corresponding to a point of time when each of a plurality of image frames is output from the 3D display apparatus 100 and duty information of a driving signal which causes shutters of the 3D glasses 300 to turn on.

The relay apparatus 200 receives the IR signal transmitted from the 3D display apparatus 100. Thus, the relay apparatus 200 may be disposed in front of an IR transmission unit (not shown) provided to transmit the IR signal in the 3D display apparatus 100.

The relay apparatus 200 may detect control information for driving of the 3D glasses 300 included in the IR signal and generate a transmission packet according to an RF communication protocol based on the control information. Specifically, the relay apparatus 200 may detect the control information using a mapping table including information for IR signals generated in the 3D display apparatus 100 of different manufacturers.

The relay apparatus 200 may generate a transmission packet according to an RF communication protocol based on the control information and transmit the generated transmission packet to the 3D glasses 300. Here, the RF communication protocol may include a Bluetooth communication protocol or a Zigbee communication protocol and thus the relay apparatus 200 may include a Bluetooth communication module or a Zigbee communication module.

Specifically, the relay apparatus 200 acquires information for points of time when a left-eye shutter glass and a right-eye shutter glass of the 3D glasses turn on or turn off based on the synchronous signal and duty information, which are detected based on the mapping table.

The relay apparatus 200 may generate a transmission packet according to the RF communication protocol so that the information for points of time in which the left-eye shutter glass and the right-eye shutter glass turn on and turn off are included in the transmission packet and transmit the generated transmission packet to the 3D glasses including an RF communication module.

Thus, the relay apparatus 200 may relay communication between the 3D display apparatus 100 not including an RF communication module and the 3D glasses 300 including an RF communication module.

The 3D glasses 300 receive the transmission packet generated according to the RE communication protocol from the relay apparatus 200.

The 3D glasses 300 may generate a driving signal which causes the left-eye and right-eye shutter glasses to turn on and turn off based on the information for the points of time in which the left-eye and right-eye shutter glasses turn on/off and cause the left-eye and right-eye shutter glasses to alternately turn on according to the generated driving signal.

Thereby, the left-eye and right-eye shutter glasses of the 3D glasses 300 turn on and turn off in synchronization with output periods of the left-eye image frame and the right-eye image frame output from the 3D display apparatus 100.

According to the above-described exemplary embodiment, the relay apparatus receives the synchronous signal and duty information transmitted from the 3D display apparatus in an IR type, generates the transmission packet according the RF communication protocol based on the synchronous signal and duty information, and transmits the transmission packet to 3D glasses 300. Therefore, it is possible to ensure compatibility of the 3D display apparatus of the IR type with the 3D glasses of the RF communication protocol type.

According to the above-described exemplary embodiment, it has been described that the relay apparatus 200 is provided to be separated from the 3D glasses 300, but it is only an example and the relay apparatus 200 may be integrated with the 3D glasses 300. That is, the relay apparatus 200 may be built in the 3D glasses 300 or separately attached to the 3D glasses 300.

The 3D display apparatus 100 according to this embodiment may be implemented to display a 3D image or all of a 2D image and a 3D image. Here, the 3D display apparatus 100 may be implemented with a 3D television, but it is only one exemplary embodiment and any apparatus capable of displaying a 3D image may be applied. For example, the 3D display apparatus 100 may be a 3D monitor, a 3D image projector, or the like.

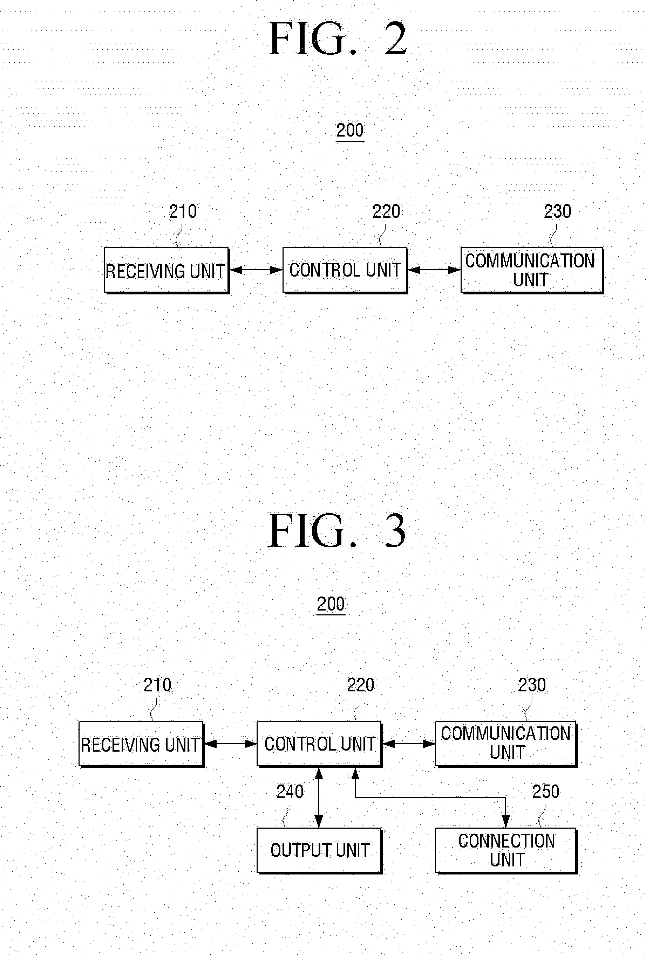

FIG. 2 is a block diagram illustrating a configuration of a relay apparatus according to an exemplary embodiment. As shown in FIG. 2, the relay 200 may include a receiving unit 210, a control unit 220, and a communication unit 230.

The receiving unit 210 receives an IR signal from a 3D display apparatus. Specifically, the receiving unit 210 may include at least one IR receiving unit (not shown) to receive different IR signals from each other, which are transmitted from 3D display apparatuses for each manufacturer. Here, the IR signals transmitted from the 3D display apparatuses may include control information for driving of 3D glasses.

The control unit 220 controls an overall operation of configurations included in the relay apparatus 200.

In particular, the control unit 220 may detect control information for driving of the 3D glasses included in the IR signal and generate a transmission packet according to the RF communication protocol based on the control information.

Here, the control information may include at least one of a synchronous signal corresponding to a point of time when each of a plurality of image frames is output from the 3D display apparatus and duty information of a driving signal which causes shutters of the 3D glasses to turn on.

Specifically, the synchronous signal may be a signal in synchronization with points of time when a left-eye image frame and a right-eye image frame are output from the 3D display apparatus.

For example, the synchronous signal may be a signal in synchronization with a vertical synchronous signal (Vsync) for each of the left-eye image frame and the right-eye image frame. Alternatively, the synchronous signal may be a signal delayed by a preset time from the vertical synchronous signal for each of the left-eye image frame and the right-eye image frame and in synchronization with the vertical synchronous signal for each of the left-eye image frame and the right-eye image frame.

The duty information may be information for points of time when the left-eye shutter glass and the right-eye shutter glass of the 3D glasses turn on.

The inclusion of the synchronous signal and the duty information in the IR signal provides an image with a 3D effect to a user by causing the left-eye shutter glass of the 3D glasses to turn on during a section when the left-eye image frame is output from the 3D display apparatus and causing the right-eye shutter glass of the 3D glasses to turn on during a section when the right-eye image frame is output from the 3D display apparatus.

The control unit 220 may detect at least one of control information for a power saving mode and control signal for a dual view mode in the 3D glasses. That is, the above-described control information may further include at least one of information for execution/non-execution of the power saving mode of the 3D glasses and information for execution/non-execution of the duel view mode of the 3D glasses.

Here, the power saving mode is a mode for blocking power supply for unnecessary modules of various modules constituting the 3D glasses to minimize power consumption of the 3D glasses. The dual view mode is a mode for providing images corresponding to different contents from each other to a plurality of users.

The control unit 220 may detect a synchronous signal and duty information included in an IR signal using a mapping table including information for IR signals generated in the 3D display apparatuses for each manufacturer. The control unit 220 may detect execution/non-execution of the power saving mode and execution/non-execution of dual view mode in the 3D glasses using the mapping table.

The control unit 220 may pre-store the mapping table including waveforms of IR signals generated from the 3D display apparatuses for each manufacturer, synchronous signals included in the IR signals having corresponding waveforms, duty information, execution/non-execution of the power saving mode, and execution/non-execution of the dual view mode. The control unit 220 may compare a waveform of a received IR signal with the mapping table and detect a synchronous signal and duty information included in the received IR signal, information for execution/non-execution of the power saving mode, and information for execution/non-execution of dual view mode.

In addition, the control unit 220 may detect a frame rate of the 3D display apparatus with reference to the IR single. Specifically, the control unit 220 may detect frame rate information of the 3D display apparatus by acquiring a vertical synchronous signal of the 3D display apparatus using the detected synchronous signal.

The control unit 220 may perform filtering on the IR signal before detecting the control information based on the IR signal to remove noise included in the IR signal.

The control unit 220 may convert the IR signal transmitted from the 3D display apparatus into a transmission packet to be processed in the 3D glasses according to the RF communication protocol in order to provide communication between a 3D display apparatus without an RF communication module and 3D glasses with an RF communication module.

That is, the control unit 220 may acquire timing information for a shutter-on point of time or a shutter-off point of time of 3D glasses with reference to the IR signal and transmit a transmission packet including the timing information. Here, the timing information may be delay information from a reference point of time determined between the relay apparatus 200 and the 3D glasses to the shutter-on or off point of time of 3D glasses.

Specifically, the control unit 220 may acquire information from a reference point of time to a point of time when the left-eye or right-eye shutter of the 3D glasses turns on or turns off based on the detected synchronous signal and duty information and generate a transmission packet including the information. Here, the reference point of time may be, for example, a rising point of time of a vertical synchronous signal for each of the left-eye and right-eye image frames output from the 3D display apparatus. The control unit 220 may control the communication unit 230 to transmit the information for the reference point of time to the 3D glasses.

For example, when the reference point of time is set to a rising point of time of the vertical synchronous signal for the left-eye image frame output from the 3D display apparatus, the control unit 220 may transmit a transmission packet including information in which the points of time when the left-eye shutter glass turns on and off are points of time elapsed by 0 ms and 16.682 ms from the rising point of time of the vertical synchronous signal for the left-eye image frame, and the points of time when the right-eye shutter glass turns on and off are points of time elapsed by 16.683ms and 33.365ms from the rising point of time of the vertical synchronous signal for the left-eye image frame.

The controller unit 220 may generate a transmission packet including frame rate information of the 3D display apparatus with reference to the IR signal. That is, the control unit 220 may acquire a vertical synchronous signal of the 3D display apparatus using the detected synchronous signal to detect the frame rate information of the 3D display apparatus and generate the transmission packet including the detected frame rate information.

Meanwhile, the control unit 220 may further cause information for execution/non-execution for the power saving mode of 3D glasses and information for execution/non-execution for the dual view mode to be included in the transmission packet. Thereby, the 3D glasses which receive the corresponding transmission packet may perform an operation corresponding thereto.

For example, when the information for execution of the power saving mode is included in the transmission packet, the 3D glasses may supply a power only to a receiving unit (not shown) which receives the transmission packet from the relay apparatus 200 and block a power to other modules (for example, a shutter driving unit (not shown) configured to driving a shutter), thereby minimizing power consumption of the 3D glasses.

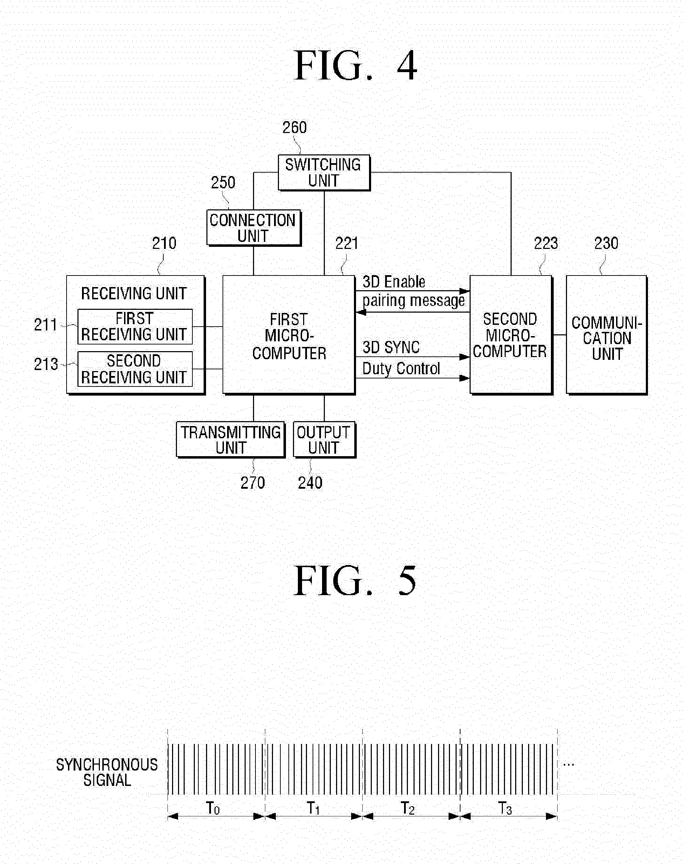

Although the above-described exemplary embodiment has illustrated that a process of detecting the synchronous signal and duty information from the received IR signal and generating the transmission packet according the RF communication protocol using the detected synchronous signal and duty information is controlled by one control unit 220, the control unit 220 may include a separate microcomputer to separately control an operation of detecting the synchronous signal and duty information from the received IR signal and an operation of generating the transmission packet according the RF communication protocol using the detected synchronous signal and duty information. The separation control operation will be described later with reference to the accompanying FIG. 4.

The communication unit 230 performs communication with the 3D glasses. Specifically, the communication unit 230 may transmit the transmission packet generated in the control unit 220 to the 3D glasses. Thus, the communication unit 230 may include an RF communication module and perform RF communication with the 3D glasses based on the RF communication protocol.

For example, the communication unit 230 may include a Bluetooth communication module or a Zigbee communication module and perform communication with the 3D glasses according to the Bluetooth communication protocol or the Zigbee communication protocol.

FIG. 3 is a block diagram illustrating a detailed configuration of a relay apparatus according to an exemplary embodiment. In FIG. 3, the configurations having the same reference as those in FIG. 2 perform the same functions and thus the overlapping description will be omitted.

An output unit 240 includes at least one light emitting diode (LED).

The control unit 230 may control a light-emitting state of the LED constituting the output unit 240 to cause the LED to display at least one of reception/non-reception of the IR signal, transmission/non-transmission of the transmission packet, and application/non-application of a power.

Specifically, the control unit 220 may control an on/off operation of one of the LEDS to cause the one LED to display application/non-application of the power and control an on/off operation of the other LED of the LEDS, which has a different color from the one LED to cause display the other LED to display reception/non-reception of the IR signal and transmission/non-transmission of the transmission packet.

For example, when a power is applied to the relay apparatus 200, the control unit 220 may cause a red LED to turn on, thereby displaying application/non-application of the power. When the IR signal is received from a 3D display apparatus, the control unit 220 may cause a green LED to turn on, thereby displaying reception/non-reception of the IR signal. In addition, the control unit 220 may control the green LED to turn on/off for a constant time, thereby displaying transmission/non-transmission of the transmission packet.

However, the above-described exemplary embodiment is only an example, and the control unit 220 may variously control light-emitting points of time, light-emitting durations, and light-emitting periods of a plurality of LEDs having different colors from each other to cause the plurality of LEDs to display various operation states.

Meanwhile, according to another exemplary embodiment, it is possible to implement that various operation states of the above-described relay apparatus 200 are displayed by adjusting a light-emitting point of time, a light-emitting duration, and a light-emitting period of an LED having one color.

A connection unit 250 receives a power from a 3D display apparatus.

Specifically, the connection unit 250 may include a wired interface connectable to the 3D display apparatus, receive the power from the 3D display apparatus and supply the power to each module constituting the relay apparatus 200. For example, the wired interface may be implemented with a universal serial bus (USB) interface, or the like.

Meanwhile, although the above-described exemplary embodiment has illustrated that the power for driving the relay apparatus is supplied from the 3D display apparatus, it is only an example. That is, the relay apparatus may include a separate power unit to supply a power to each module constituting the relay apparatus.

FIG. 4 is a block diagram illustrating a detailed configuration of a relay apparatus according to an exemplary embodiment. In FIG. 4, the configurations having the same reference as those in FIGS. 2 and 3 perform the same functions and thus the overlapping description will be omitted.

However, the relay apparatus 200 of FIG. 4 is different from the exemplary embodiments of FIGS. 2 and 3 in that a first microcomputer 221 configured to receive an IR signal and control an operation of detecting a synchronous signal and duty information from the received IR signal and a second microcomputer 223 configured to control RF communication with 3D glasses are separately provided.

The receiving unit 210 receives an IR signal from a 3D display apparatus. Specifically, the receiving unit 210 may include a first receiving section 211 and a second receiving section 213 to receive IR signals transmitted from 3D display apparatuses manufactured by different manufacturers.

The first microcomputer 221 may receive an IR signal from the receiving unit 210 and perform an operation of detecting a synchronous signal and duty information from the IR signal.

Specifically, the first microcomputer 221 may detect the synchronous signal and duty information included in the IR signal using a mapping table including information for the IR signals generated in the 3D display apparatuses for each manufacturer.

Here, the mapping table may be a table including waveforms of the IR signals generated in the 3D display apparatuses for each manufacturer and the synchronous signals and duty information included in the IR signals having corresponding waveforms. In addition, the mapping table may be pre-stored in the first microcomputer 221 or a separate storage unit (not shown) and downloaded and updated from an external server (not shown) by a command of a user or every preset time interval.

The first microcomputer 221 may compare a waveform of an IR signal received from the receiving unit 210 with the mapping table to detect a synchronous signal, duty information, and the like included in the received IR signal.

In addition, the first microcomputer 221 may be connected to the second microcomputer 223 through an input/output (I/O) terminal constituted of 8 pins as in the following Table 1.

Table 1

| No. | Type of Pins | I/O | Voltage Level |
|---|---|---|---|
| 1 | 3D Enable | I | 3.3V |
| 2 | Pairing Message | O | 3.3V |
| 3 | Reserved | | |
| 4 | Reserved | | |
| 5 | Reserved | | |
| 6 | GND | | |
| 7 | 3D Sync | I | 3.3V |
| 8 | Duty Control | I | 3.3V |

Specifically, the first microcomputer 221 outputs a 3D enable signal to the second microcomputer 223 when an IR signal is received through the receiving unit 210.

Thus, the second microcomputer 223 performs a pairing operation with the first microcomputer 221 and outputs a pairing message indicating completion of the pairing operation to the first microcomputer 221.

When the pairing message is received, the first microcomputer 221 transmits a synchronous signal 3D Sync and duty information Duty Control to the second microcomputer 223.

Specifically, the first microcomputer 221 may transmit the synchronous signal having a pulse of a constant period (for example, 60Hz, 50Hz, 48Hz, or the like) to the second microcomputer 223 through a No. 7 pin and the first microcomputer 221 may transmit the duty information to the second microcomputer 223 through a No. 8 pin.

In another exemplary embodiment, for example, the first microcomputer 221 may transmit the duty information to the second microcomputer 223 as a signal having a specific level (for example, a high signal has a duty of 100% and a low signal has a duty of 80%).

The second microcomputer 223 generates a transmission packet according to the RF communication protocol based on the synchronous signal and duty information input from the first microcomputer 221. Here, the RF communication protocol may be a Bluetooth communication protocol or a Zigbee communication protocol.

Specifically, the second microcomputer 223 may convert an IR signal transmitted from a 3D display apparatus into a transmission packet according to the RF communication protocol to be processed in 3D glasses so as to communicate the 3D display apparatus not including an RF communication module with the 3D glasses including an RF communication module. That is, the second microcomputer 223 may acquire information for points of time when the left-eye and right-eye shutter glasses of the 3D glasses turn on/off based on the synchronous signal and duty information received from the first microcomputer 221 and generates a transmission packet including the acquired information.

The second microcomputer 223 may determine where or not the synchronous signal input from the first microcomputer 221 is stable and filter a portion of the synchronous signal which is not stable to generate a transmission packet according to the RF communication protocol. Here, the portion of the synchronous signal which is not stable represents a portion of the synchronous signal in which a time interval is not regular.

Specifically, the second microcomputer 223 may acquire period information of a first sequence and period information of a second sequence in the synchronous signal and determine whether or not the synchronous signal is stable using a difference between the period information of the first and second sequences. That is, when the difference between the period information is less than preset time information, the second microcomputer 223 may determine that the synchronous signal is stable in the second sequence and subsequent sequences and generate the transmission packet using the stable transmission packet. On the other hand, a method of filtering the portion of the synchronous signal which is not stable by the second microcomputer 223 will be described later with reference to the accompanying FIG. 5.

A communication unit 230 transmits the transmission packet generated in the second microcomputer 223 to 3D glasses.

An output unit 240 may include at least one LED and indicate an operation state of the relay apparatus 200 according to control of the first microcontroller 221.

Specifically, the microcomputer 221 control a light-emitting state of the LED constituting the output unit 240 to cause the LED to display at least one of reception/non-reception of the IR signal, transmission/non-transmission of the transmission packet (completion/non-completion of paring with the 3D glasses), and application/non-application of a power. A detailed operation of the output unit 240 is as the following Table 2.

Table 2

| Operation | Operation state of LED |
|---|---|
| Power Application | Red LED On |
| Reception of IR Signal | Green LED On |
| Reception of Unstable IR signal | Green LED On in period of 3 sec |
| Completion of Pairing with 3D glasses | Green LED On in period of 0.5 sec for 3 sec |

As above-described Table 2, when a power of 5V is applied to the second microcomputer 223, the first microcomputer 221 causes the red LED included in the output unit 240 to turn on, thereby displaying application/non-application of a power.

When the normal IR signal is received from the 3D display apparatus, the first microcomputer 221 may cause the green LED included in the output unit 240 to turn on, thereby displaying reception/non-reception of the IR signal. However, when an unstable IR signal is received from the 3D display apparatus, the first microcomputer 221 may cause the green LED to turn on/off in a period of 3 sec, thereby displaying that the unstable IR signal has been received. Here, the unstable IR signal may be an IR signal not having a constant period or an IR signal having a waveform which is not pre-stored in the mapping table.

In addition, the first microcomputer 221 may cause the green LED to turn on in a period of 0.5 sec for 3 sec, thereby displaying pairing/non-pairing with the 3D glasses.

Although the above-described exemplary embodiment has been described to detect the synchronous signal and duty information from the IR signal and to generate the transmission packet, this is only an example. That is, as described in FIG. 2, information for execution/non-execution of the power saving mode and dual view mode of the 3D glasses may be detected from the IR signal using the mapping table and the detection operation may be performed by the first microcomputer 221.

The first microcomputer 221 may transmit the detected information for execution/non-execution of the power saving mode and dual view mode to the second microcomputer 223. The second microcomputer 223 may generate the transmission packet further including the corresponding information.

Meanwhile, the first microcomputer 221 may transmit the information for execution/non-execution of the power saving mode and dual view mode to the second microcomputer 223 through No. 3 pin to No. 6 pin or include a separate I/O terminal.

The connection unit 250 receives a power from a 3D display apparatus. Specifically, the connection unit 250 may include a wired interface connectable to the 3D display apparatus, receive a power from the 3D display apparatus and supply the power to the receiving unit 210, the first microcomputer 221, the second microcomputer 223, the communication unit 230, the output unit 240, a switching unit 260, and a transmitting unit 270. For example, the wired interface may be implemented with a USB interface.

Although the above-described exemplary embodiment has described that the power for driving the relay apparatus is received from the 3D display apparatus, it is only an example. That is, the relay apparatus may include a separate power unit to supply a power to each module constituting the relay apparatus.

The switching unit 260 performs a function to transmit the power of the connection unit 250 to the second microcomputer 223 according to control of the first microcomputer 221. Specifically, when the IR signal is received in the receiving unit 210, the first microcomputer 221 may control the switching unit 260 to provide the power input the connection unit 250 to the second microcomputer 223. This is because when the 3D display apparatus operates in a 2D mode, the first microcomputer 221 causes the second microcomputer 223 to turn off and only when the 3D display apparatus operates a 3D mode and transmits the IR signal, the first microcomputer 221 causes the second microcomputer 223 to turn on, thereby reducing power consumption.

The transmitting unit 270 transmits the IR signal received from the 3D display apparatus to the outside.

That is, the transmitting unit 270 may be implemented with an IR LED, bypass the IR signal transmitted from the 3D display apparatus and transmit the bypassed IR signal to the 3D glasses in an IR type. This is because the transmitting unit 270 transmits the IR signal transmitted from the 3D display apparatus to 3D glasses not including an RF communication module, that is, 3D glasses which receive only the IR signal. Therefore, according to the exemplary embodiment, 3D glasses including the RF communication module as well as 3D glasses capable of receiving only the IR signal may communicate with the 3D display apparatus.

FIG. 5 is a view illustrating a method of filtering an unstable synchronous signal according to an exemplary embodiment. In particular, FIG. 5 illustrates the case where a synchronous signal of 60Hz is transmitted from the first microcomputer 221, but the second microcomputer 223 receives a synchronous signal including a portion of which a time interval is not constant by external light.

First, the second microcomputer 223 sequentially classifies the synchronous signal by the preset number and divides the synchronous signal into a plurality of sequences. Here, the preset number is 16.

That is, the second microcomputer 223 sequentially classifies the synchronous signal received from the first microcomputer in 16 units and divides the synchronous signal into a first sequence $T_0$, second sequence $T_1$, ..., a nth sequence $T_{n-1}$ (n is natural number).

The second microcomputer 223 acquires period information of each sequence and determines whether or not the synchronous signal is stable using a difference of the acquired period information.

First, the second microcomputer 223 calculates period information for each sequence, calculates a difference of the period information between subsequent two sequences, and calculates information of variation between the period information of the subsequent two sequences. Here, the period information may be an average for time intervals of synchronous signals included in each sequence.

Specifically, the second microcomputer 223 divides a time of the first sequence $T_0$ by the number of synchronous signals included in the first sequence $T_0$ and calculates the average for the time interval of the synchronous signals included in the first sequence $T_0$. Similarly, the second microcomputer 223 divides a time of the second sequence $T_1$ by the number of synchronous signals included in the second sequence $T_1$ and calculates the average for the time interval of the synchronous signals included in the second sequence $T_1$.

Then, the second microcomputer 223 calculates a time difference between the calculated averages and calculates the difference between the period information for each sequence. Specifically, the second microcomputer 223 calculates the difference between the average for the time intervals of the synchronous signals included in the first sequence $T_0$ and the average for the time intervals of the synchronous signals included in the second sequence $T_1$.

Hereafter, the second microcomputer 223 determines whether or not the difference between the period information for each sequence is smaller than the preset time information to determine whether or not the synchronous signal is stable. Here, the preset time information depends on a frequency of the synchronous signal received from the first microcomputer 221 and for example, when the first microcomputer 221 transmits a synchronous signal of 60Hz, the preset time information may be $4\mu s$.

Specifically, when the difference between the period information is smaller than the preset time information, that is, when the difference between the period information satisfies the following Equation 1, the second microcomputer 223 determines that the synchronous signal included in the second sequence $T_1$ among the first and second sequences $T_0$ and $T_1$ is stable. The second microcomputer 223 may generate a transmission packet according to the RF communication protocol based on the synchronous signals included in the second sequence $T_1$ and subsequent sequences $T_2$, $T_3$, ..., and $T_{n-1}$.

### Equation 1

$$\left| T_1 - T_0 \right| < \alpha$$

Here, $\alpha$ is the preset time information and may be $4\mu s$ when the synchronous signal of 60Hz is received from the first microcomputer 221.

However, when the difference between the period information for each sequence is larger than the preset time information, the second microcomputer 223 iteratively performs the above-described calculation operation calculates for the second sequence $T_1$ and the third sequence $T_2$.

That is, the second microcomputer 223 divides a time of the third sequence $T_2$ by the number of the synchronous signals included in third sequence $T_2$ and calculates an average for the time intervals of the synchronous signals included in the third sequence $T_2$.

The second microcomputer 223 calculates the difference between the average for the time intervals of the synchronous signals included in the second sequence $T_1$ and the average for the time intervals of the synchronous signals included in the fourth sequence $T_3$. When the calculation result satisfies the following Equation 2, the second microcomputer 223 determines that the synchronous signal included in the third sequence $T_2$ is stable. Then, the second microcomputer 223 may generate a transmission packet according to the RF communication protocol based on the synchronous signals included in the third sequence $T_2$ and subsequent sequences $T_3$, $T_4$, ..., and $T_{n-1}$.

Equation 2

$$|\ T_2 - T_1\ | < \alpha$$

Here, $\alpha$ is the preset time information and may be 4$\mu$s when the synchronous signal of 60Hz is received from the first microcomputer 221.

However, when the difference between the period information for each sequence is larger than the preset time information, the second microcomputer 223 iteratively performs the above-described calculation for the third sequence $T_2$ and the fourth sequence $T_3$. That is, the second microcomputer 223 iteratively performs the above calculation until a difference between time information for subsequent sequences becomes smaller than the preset time information.

In FIG. 5, it has been described that the plurality of synchronous signals are classified by in 16 units and the preset time information is 4$\mu$s. However, it is only an illustrative example in which the synchronous signal of 60Hz is input from the first microcomputer 221 and the synchronous signal may be set depending on a frequency of the synchronous signal input from the first microcomputer 221.

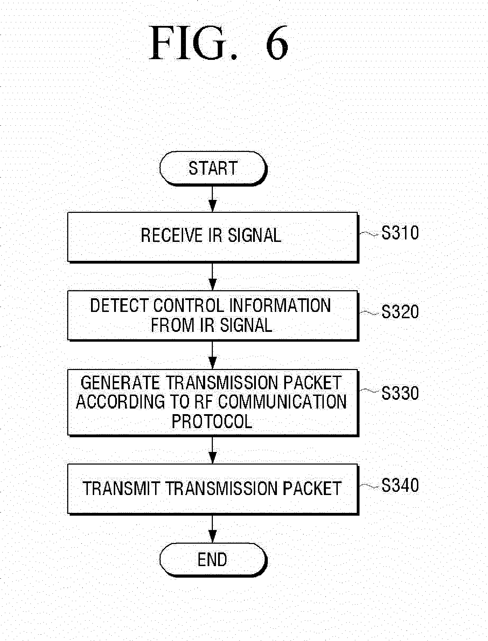

FIG. 6 is a flowchart illustrating a relay method of a relay apparatus configured to relay communication between a 3D display apparatus and 3D glasses according to an exemplary embodiment.

First, an IR signal is received from the 3D display apparatus (S310).

Hereafter, control information for driving of the 3D glasses included in the IR signal is detected (S320). Here, the control information may include at least one of a synchronous signal corresponding to a point of time when each of a plurality of image frames is output from the 3D display apparatus and duty information of a driving signal configured to cause shutter glasses of the 3D glasses to turn on.

Specifically, the synchronous signal and duty information included in the IR signal may be detected using the mapping table including information for the IR signals generated in the 3D display apparatuses for each manufacturer.

A transmission packet according to an RF communication protocol is generated based on the control information (S330) and the generated transmission packet is transmitted to the 3D glasses (S340). Here, the RF communication protocol may include a Bluetooth communication protocol or a Zigbee communication protocol.

Specifically, timing information related to a shutter-on/off point of time of the 3D glasses may be acquired with reference to the IR signal and the transmission packet may be generated including the timing information. Here, the timing information may be delay information from a reference point of time between the relay apparatus and the 3D glasses to the shutter-on/off point of time of the 3D glasses.

That is, the information for points of time when the left-eye and right-eye shutter glasses of the 3D glasses may be acquired based on the synchronous signal and duty information and the transmission packet including the acquired information may be generated.

Meanwhile, in step S330, a transmission packet including frame rate information of the 3D display apparatus may be generated with reference to the IR signal. That is, by acquiring a vertical synchronous signal of the 3D display apparatus using the detected synchronous signal, the frame rate information of the 3D display apparatus may be detected and the transmission packet including the frame rate information may be generated.

Alternatively, in step S330, period information for the first and second sequences of the synchronous signal may be acquired and it may be determined whether or not the synchronous signal is stable using the difference between the period information for the first and second sequences. Specifically, when the difference between the period information is smaller than the preset time information, it may be determined that the synchronous signal for the second sequence and subsequent subsequences is stable and the transmission packet may be generated using the stable synchronous signal.

That is, based on the stable synchronous signal and duty information, information for points of time when the left-eye and right-eye shutter glasses of the 3D glasses turn on and off may be acquired and a transmission packet including the acquired information may be generated.

The relay method according to the exemplary embodiment may further include displaying at least one of reception/non-reception of the IR signal, transmission/non-transmission of the transmission packet, and application/non-application of a power using at least one LED.

The relay method according to the exemplary embodiment may include detecting at least one of control information for the power saving mode and control information for the dual view mode in the 3D glasses with reference to the IR signal. That is, the relay method may include detecting information for execution/non-execution of the power saving mode and the dual view mode of the 3D glasses with reference to the IR signal and generating a transmission packet including the detected information.

Meanwhile, the relay method may include receiving a power from the 3D display apparatus.

When a relay apparatus executes the relay method according to the exemplary embodiment, the relay apparatus may be integrated with the 3D glasses.

The exemplary embodiment of the inventive concept may include a recording medium including a program configured to execute the relay method as described above, that is, a computer-readable recording medium. Here, the computer-readable recording medium includes all kinds of recording devices in which data readable by a computer system is stored. The computer-readable recording medium may include a read only memory (ROM), a random access memory (RAM), a compact disc (CD)-ROM, a magnetic tape, a floppy disc, an optical data storage device, or the like. In addition, the computer-readable recording medium is distributed in computer systems connected on a network and store and execute a computer-readable code in a distribution manner.

The foregoing exemplary embodiments and advantages are merely exemplary and are not to be construed as limiting the present inventive concept. The exemplary embodiments can be readily applied to other types of apparatuses. Also, the description of the exemplary embodiments is intended to be illustrative, and not to limit the scope of the claims, and many alternatives, modifications, and variations will be apparent to those skilled in the art.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1.  A relay apparatus which relays communication between a three dimensional (3D) display apparatus and 3D glasses, comprising:

    a receiving unit configured to receive an IR signal from the 3D display apparatus;
    a control unit configured to detect control information for driving the 3D glasses included in the IR signal and generate a transmission packet according to an RF communication protocol based on the detected control information; and
    a communication unit configured to transmit the transmission packet to the 3D glasses.

2.  The relay apparatus as claimed in claim 1, wherein the detected control information includes at least one of a synchronous signal corresponding to a point of time when each of a plurality of image frames is output from the 3D display apparatus and duty information of a driving signal which causes shutters of the 3D glasses to turn on.

3.  The relay apparatus as claimed in claim 2, wherein the control unit detects the synchronous signal and duty information included in the IR signal using a mapping table including information for IR signals generated from 3D display apparatuses of different manufacturers.

4.  The relay apparatus as claimed in claim 2 or 3, wherein the control unit acquires period information of a first sequence of the synchronous signal and period information of a second sequence of the synchronous signal and determines whether or not the synchronous signal is stable using a difference between the period information of the first sequence and the period information of the second sequence.

5.  The relay apparatus as claimed in claim 4, wherein the control unit determines that the synchronous signal for the second sequence and subsequent sequences is stable when the difference between the period information of the first sequence and the period information of the second sequence is less than preset time information and generates the transmission packet using the stable synchronous signal.

6.  The relay apparatus as claimed in any one of claims 1 to 5, further comprising an output unit including at least one light emitting device (LED) module,
    wherein the control unit controls the output unit to display at least one of reception/non-reception of the IR signal, transmission/non-transmission of the transmission packet, and application/non-application of power to the relay apparatus.

7. The relay apparatus as claimed in any one of claims 1 to 6, wherein the RF communication protocol is a Bluetooth communication protocol.

8. The relay apparatus as claimed in any one of claims 1 to 7, further comprising a connection unit configured to receive a power from the 3D display apparatus.

9. The relay apparatus as claimed in any one of claims 1 to 8, wherein the relay apparatus is integrated with the 3D glasses.

10. The relay apparatus as claimed in any one of claims 1 to 9, wherein the control unit acquires timing information related to a shutter-on point of time or a shutter-off point of time of the 3D glasses with reference to the IR signal and generates the transmission packet including the timing information.

11. The relay apparatus as claimed in claim 10, wherein the timing information is delay information from a reference point of time determined between the relay apparatus and the 3D glasses to the shutter-on point of time or shutter-off point of time of the 3D glasses.

12. The relay apparatus as claimed in any one of claims 1 to 11, wherein the control unit generates the transmission packet including frame rate information of the 3D display apparatus with reference to the IR signal.

13. The relay apparatus as claimed in any one of claims 1 to 12, wherein the control unit detects at least one of control information for a power saving mode of the 3D glasses and control information for a dual view mode of the 3D glasses with reference to the IR signal.

14. A relay method of a relay apparatus which relays communication between a three dimensional (3D) display apparatus and 3D glasses, the method comprising:

receiving an IR signal from the 3D display apparatus;
detecting control information for driving of the 3D glasses included in the IR signal and generating a transmission packet according to an RF communication protocol based on the detected control information; and
transmitting the transmission packet to the 3D glasses.

15. The relay method as claimed in claim 14, wherein the control information includes at least one of a synchronous signal corresponding to a point of time when each of a plurality of image frames is output from the 3D display apparatus and duty information of a driving signal which causes shutters of the 3D glasses to turn on.

# FIG. 1

1000

100

200

300

# FIG. 2

200

| 210 | 220 | 230 |
|---|---|---|
| RECEIVING UNIT | CONTROL UNIT | COMMUNICATION UNIT |

# FIG. 3

200

| 210 | 220 | 230 |
|---|---|---|
| RECEIVING UNIT | CONTROL UNIT | COMMUNICATION UNIT |

| 240 | 250 |
|---|---|
| OUTPUT UNIT | CONNECTION UNIT |

# FIG. 4

260

SWITCHING UNIT

250

CONNECTION UNIT

210

RECEIVING UNIT

211 — FIRST RECEIVING UNIT

213 — SECOND RECEIVING UNIT

221

FIRST MICRO-COMPUTER

3D Enable
pairing message

3D SYNC
Duty Control

223          230

SECOND MICRO-COMPUTER

COMMUNI-CATION UNIT

TRANSMITTING UNIT          OUTPUT UNIT

270          240

# FIG. 5

SYNCHRONOUS SIGNAL

T0          T1          T2          T3          ...

# FIG. 6

```
            ┌─────────────┐
            │    START    │
            └─────────────┘
                   │
                   ▼
    ┌───────────────────────────────┐
    │      RECEIVE IR SIGNAL         │─── S310
    └───────────────────────────────┘
                   │
                   ▼
    ┌───────────────────────────────┐
    │   DETECT CONTROL INFORMATION   │─── S320
    │        FROM IR SIGNAL          │
    └───────────────────────────────┘
                   │
                   ▼
    ┌───────────────────────────────┐
    │ GENERATE TRANSMISSION PACKET   │
    │ ACCORDING TO RF COMMUNICATION  │─── S330
    │           PROTOCOL             │
    └───────────────────────────────┘
                   │
                   ▼
    ┌───────────────────────────────┐
    │ TRANSMIT TRANSMISSION PACKET   │─── S340
    └───────────────────────────────┘
                   │
                   ▼
            ┌─────────────┐
            │     END     │
            └─────────────┘
```